# EUROPÄISCHE PATENTSCHRIFT

(11) **EP 2 636 990 B1**
(45) Veröffentlichungstag und Bekanntmachung des Hinweises auf die Patenterteilung: **14.06.2017**
(21) Anmeldenummer: 13000869.1
(22) Anmeldetag: 21.02.2013
(51) Int. Cl.: G01B 13/00

(54) **Messkörper einer pneumatischen Messvorrichtung**
Measuring body of a pneumatic measuring device
Corps de mesure pour un dispositif de mesure pneumatique

(30) Priorität: 07.03.2012 DE 102012004339
(43) Veröffentlichungstag der Anmeldung: 11.09.2013
(73) Patentinhaber: JENOPTIK Industrial Metrology Germany GmbH, 78056 Villingen-Schwenningen (DE)
(72) Erfinder: Decool, Francois, 14400 Bayeux (FR)
(74) Vertreter: Wagner, Carsten

(56) Entgegenhaltungen:
- DE-A1- 10 223 592
- US-A- 2 779 188

## Beschreibung

Die Erfindung betrifft einen Messkörper der im Oberbegriff des Anspruchs 1 genannten Art einer pneumatischen Messvorrichtung zur Vermessung eines Werkstücks.

Pneumatische Messvorrichtungen sind allgemein bekannt und dienen beispielsweise in der dimensionellen Messtechnik dazu, berührungslose Messungen mit einer sehr hohen Auflösung von beispielsweise bis zu 0,1 µm auszuführen. Insbesondere können mit pneumatischen Messvorrichtungen statische und/oder dynamische Messungen geometrischer Eigenschaften wie Geradheit, Ebenheit, Rundheit, Zylinderform, Profil, Winkel, Rechtwinkligkeit, Parallelität, Position, Konzentrizität, Symmetrie und Rundlauf gemessen werden.

Durch US 2 846 871 ist ein Messkörper der betreffenden Art einer pneumatischen Messvorrichtung zur Vermessung eines Werkstückes bekannt, der einen Grundkörper aufweist, in dem ein erster Strömungskanal zur Verbindung einer Druckluftquelle mit einer Messdüse gebildet ist, wobei der erste Strömungskanal einen Verengungsbereich mit wenigstens einer Querschnittsverengung aufweist. Der Messkörper weist einen zweiten Strömungskanal zur Verbindung des Verengungsbereiches mit einem Druckwandler auf.

Ein ähnlicher Messkörper ist auch durch US 2 513 374 bekannt.

Durch US 1 940 921 ist eine nach dem Venturi-Prinzip arbeitende Messvorrichtung bekannt.

Durch DE 10223592 A1 (entsprechend US 6647808 B2 und JP 002002 357410A) ist ein Messkörper einer pneumatischen Messvorrichtung zur Vermessung eines Werkstücks bekannt, der einen Grundkörper aufweist, in dem ein erster Strömungskanal zur Verbindung einer Druckluftquelle mit einer Messdüse gebildet ist, wobei der erste Strömungskanal in einem Verengungsbereich wenigstens eine Querschnittsverengung aufweist. Der Messkörper weist ferner einen zweiten Strömungskanal zur Verbindung des Verengungsbereiches mit einem Messwandler auf.

Durch DE 10 2007 028141 A1 ist eine Luftdüse in Form einer Ventildüse bekannt, die als ein im wesentlichen rohrförmiges Bauteil ausgebildet ist, das bezüglich der Richtung einer Luftströmung in einen vorderen ersten Abschnitt und einen hinteren zweiten Abschnitt geteilt ist, wobei der zweite Abschnitt über ein Verengungsbereich 10 (engster Querschnitt) mit dem ersten Abschnitt 8 verbunden ist und wobei ferner der Verengungsbereich über einen Strömungskanal mit einem Messgerät verbindbar ist und so der im Verengungsbereich herrschende Druck abgenommen werden kann.

Durch DE 20 2006 010164 U1 ist eine pneumatische Messvorrichtung zum Erfassen von Unregelmäßigkeiten in der Topografie von Oberflächen an insbesondere rotationssymmetrischen Bauteilen bekannt, die eine in einem Gehäuse ausgebildete Düse zur Erzeugung eines von der Düsenöffnung auf die zu untersuchende Oberfläche an dem Bauteil gerichteten wirbelartigen Gasstromes und mindestens einen Schalldetektor oder Mikrofon zur Erfassung des durch den Gasstrom erzeugten Schalls aufweist.

Der Erfindung liegt die Aufgabe zugrunde, einen Messkörper der im Oberbegriff des Anspruchs 1 genannten Art einer pneumatischen Messvorrichtung zur Vermessung eines Werkstücks anzugeben, der einfach herstellbar ist und eine hohe Messgenauigkeit ermöglicht.

Diese Aufgabe wird durch die im Anspruch 1 angegebene Erfindung gelöst.

Der Grundgedanke der Erfindung besteht darin, den Messkörper in Axialrichtung in dem Verengungsbereich zu teilen und so zwei- oder mehrteilig auszubilden. Beispielsweise und insbesondere kann erfindungsgemäß der Verengungsbereich nach Art einer Venturi-Düse ausgebildet sein, die einen sich in Strömungsrichtung verengenden ersten Querschnittsbereich aufweist, der zu einer Querschnittsverengung mit in Strömungsrichtung im wesentlichen konstantem Querschnitt führt, an die sich in Strömungsrichtung ein sich in Strömungsrichtung erweiternder zweiter Querschnittsbereich anschließt.

Durch die axiale Teilung des Grundkörpers in dem Verengungsbereich ist es erfindungsgemäß möglich, bei der Herstellung des Grundkörpers die Bearbeitung in dem Verbindungsbereich besonders genau und sorgfältig auszuführen. Aufgrund der axialen Teilung des Grundkörpers ist die Materialbearbeitung im Verengungsbereich zum einen vereinfacht. Zum anderen können beispielsweise Grate, die sich beim Anbringen von Bohrungen in dem Grundkörper bilden, auf besonders einfache Weise entfernt werden. Unerwünschte Turbulenzen in der Luftströmung, die sich an solchen Graten bilden könnten, sind damit zuverlässig vermieden.

Der erfindungsgemäße Messkörper ist damit nicht nur einfach und kostengünstig herstellbar, sondern ermöglicht auch eine hohe Messgenauigkeit.

Vorzugsweise ist der Verengungsbereich der erfindungsgemäßen Messkörper nach Art einer Venturi-Düse ausgebildet. Es ist jedoch auch möglich, den Verengungsbereich auf andere Weise auszubilden, beispielsweise nach Art einer Blende.

Eine außerordentlich vorteilhafte Weiterbildung der Erfindung, der in Kombination mit den Merkmalen des Oberbegriffs des Anspruchs 1 eine eigenständige erfinderische Bedeutung zukommt, sieht vor, dass der zweite Strömungskanal über einen Ringraum mit dem ersten Strömungskanal kommuniziert.

Es hat sich überraschend gezeigt, dass sich auf diese Weise das Messrauschen einer mit dem erfindungsgemäßen Messkörper ausgestatteten pneumatischen Messvorrichtung verringern lässt. Im Vergleich zu einer Konstellation, bei der der zweite Strömungskanal oder eine Mehrzahl von zweiten Strömungskanälen radial direkt in den ersten Strömungskanal mündet, ist festzustellen, dass der Ringraum in Bezug auf das Messverhalten eine mittelnde Wirkung hat. In Kombination mit der erfindungsgemäß vorgesehenen axial zwei- oder mehrgeteilten Ausführung des Messkörpers ergeben sich besonders positive Eigenschaften.

Die Erfindung ermöglicht es aufgrund der zwei- oder mehrteiligen Ausgestaltung des Grundkörpers insbesondere, den Grundkörper zur Bildung wenigstens eines zweiten Strömungskanales und/oder eines Ringraumes besonders fein zu bearbeiten. Auf diese Weise kann der Querschnitt des oder jedes zweiten Strömungskanales bzw. des Ringraumes gering gehalten werden, was sich positiv auf die Messeigenschaften des Messkörpers, insbesondere das Messrauschen und die Antwortzeit bei Durchführung einer Messung, positiv auswirkt.

In diesem Zusammenhang sieht eine besonders vorteilhafte Weiterbildung der Erfindung vor, dass der Ringraum in Axialrichtung zwischen den Teilen des Messkörpers gebildet ist. Bei dieser Ausführungsform definieren also die axialen Teile den Ringraum. Auf diese Weise ist zum einen eine besonders sorgfältige Bearbeitung der den Ringraum begrenzenden Teile des Grundkörpers möglich, so dass Material- oder Bearbeitungsungenauigkeiten, die das Messverhalten des Grundkörpers beeinflussen könnten, in weitgehendem Maße vermieden werden können. Aufgrund der zuvor beschriebenen mittelnden Wirkung des Ringraumes in Bezug auf das Messverhalten des Grundkörpers ist der Einfluss eventuell verbleibender Material- oder Bearbeitungsungenauigkeiten auf das Messverhalten des Grundkörpers weiter verringert. Auf diese Weise ergibt sich bei besonders einfacher und damit kostengünstiger Herstellbarkeit ein besonders günstiges Messverhalten des erfindungsgemäßen Messkörpers.

Erfindungsgemäß kann der Grundkörper entsprechend der jeweiligen Anforderung zwei- oder mehrteilig ausgebildet sein.

Die Teile des Grundkörpers können zur Montage desselben auf beliebige geeignete Weise miteinander verbunden werden.

Eine außerordentlich vorteilhafte Weiterbildung der Erfindung sieht vor, dass die Teile an ihren im Montagezustand einander zugewandten Ende im wesentlichen komplementär zueinander ausgebildet sind, derart, dass die Teile zusammensteckbar sind. Auf diese Weise ist die Montage des Grundkörpers besonders einfach gestaltet.

Eine andere vorteilhafte Weiterbildung der Erfindung sieht vor, dass eines der Teile zur Bildung einer Schulter einen radialen Absatz aufweist und dass die Schulter und das der Schulter im Montagezustand zugewandte Ende des anderen Teiles axiale Anschlagflächen definieren. Bei dieser Ausführungsform liegen die Anschlagflächen in Montagezustand des Grundkörpers aneinander an, wobei beispielsweise und insbesondere der Ringraum, über den der zweite Strömungskanal mit dem ersten Strömungskanal verbunden ist, in Axialrichtung entfernt zu den Anschlagflächen gebildet ist.

Erfindungsgemäß kann eine Messdüse unmittelbar an dem Messkörper gebildet sein. Es ist erfindungsgemäß jedoch auch möglich, dass die Messdüse entfernt zu dem Messkörper angeordnet und mit demselben über eine Leitung verbunden ist. Erfindungsgemäß kann entsprechend der jeweiligen Messaufgabe eine einzelne Messdüse vorgesehen sein. Es ist jedoch auch möglich, zwei oder mehrere Messdüsen vorzusehen.

Erfindungsgemäß kann der Verengungsbereich eine einzelne, insbesondere nach Art einer Venturi-Düse arbeitende Querschnittsverengung aufweisen. Es ist erfindungsgemäß jedoch auch möglich, in dem ersten Strömungskanal zwei oder mehrere Querschnittsverengungen vorzusehen, die wiederum nach dem Prinzip einer Venturi-Düse arbeiten können.

Erfindungsgemäß ist es grundsätzlich ausreichend, wenn lediglich ein zweiter Strömungskanal vorgesehen ist. Es können jedoch auch zwei oder mehrere Strömungskanäle vorgesehen sein.

Eine erfindungsgemäße pneumatische Messvorrichtung zur Vermessung eines Werkstücks, die wenigstens einen erfindungsgemäßen Messkörper aufweist, ist im Anspruch 6 angegeben.

Die Erfindung wird nachfolgend anhand der beigefügten Zeichnung näher erläutert, in der ein Ausführungsbeispiel eines erfindungsgemäßen Messkörpers dargestellt ist. Dabei bilden alle beschriebenen, in der Zeichnung dargestellten und in den Patentansprüchen beanspruchten Merkmale für sich genommen sowie in beliebiger technisch sinnvoller Kombination miteinander den Gegenstand der Erfindung, unabhängig von ihrer Zusammenfassung in den Patentansprüchen und deren Rückbeziehung sowie unabhängig von ihrer Beschreibung bzw. Darstellung in der Zeichnung.

Es zeigt:
- Fig. 1: einen Radialschnitt durch ein Ausführungsbeispiel eines erfindungsgemäßen Messkörpers im Montagezustand und
- Fig. 2: den Messkörper gemäß Fig. 1 in einer perspektivischen Explosionsdarstellung.

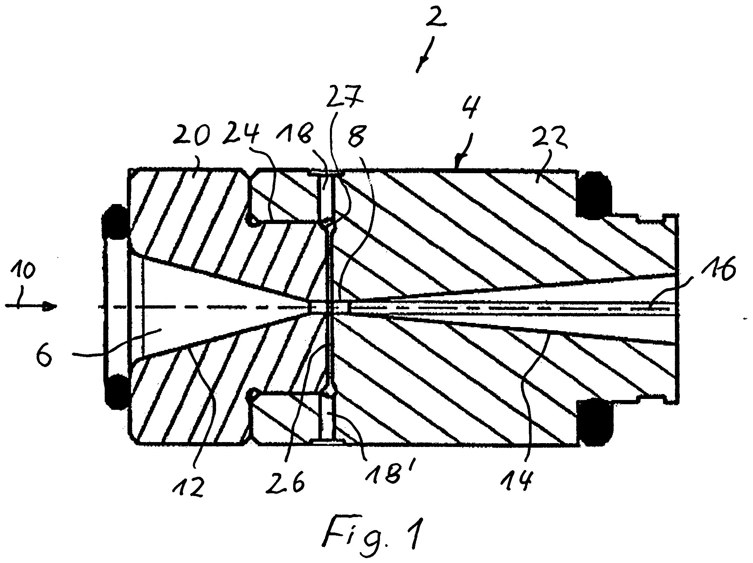

In Fig. 1 ist ein Ausführungsbeispiel eines erfindungsgemäßen Messkörpers 2 einer pneumatischen Messvorrichtung zur Vermessung eines Werkstücks dargestellt, der einen Grundkörper 4 aufweist, in dem ein erster Strömungskanal 6 zur Verbindung einer Messdüse, die an dem Messkörper 2 ausgebildet oder entfernt zu diesem angeordnet sein kann, mit einer Druckluftquelle gebildet ist.

Der erste Strömungskanal 6 weist einen Verengungsbereich mit bei diesem Ausführungsbeispiel einer Querschnittsverengung 8 auf. Bei dem dargestellten Ausführungsbeispiel ist die Querschnittsverengung 8 nach Art einer Venturi-Düse ausgebildet. Hierzu weist der erste Strömungskanal in Strömungsrichtung, die in Fig. 1 durch einen Pfeil 10 symbolisiert ist, aufeinanderfolgend einen sich in Strömungsrichtung 10 im wesentlichen konisch verengenden ersten Querschnittsbereich 12, die Querschnittsverengung 8, die in Strömungsrichtung einen im wesentlichen konstanten Querschnitt hat, sowie einen sich in Strömungsrichtung 10 im wesentlichen konisch erweiternden zweiten Querschnittsbereich 14 auf.

Bei dem dargestellten Ausführungsbeispiel ist der Grundkörper 4 im wesentlichen rotationssymmetrisch ausgebildet, wobei sich der erste Strömungskanal 6 in Axialrichtung des Grundkörpers 4 erstreckt und die Strömungsachse mit der Rotationssymmetrieachse 16 des Grundkörpers 4 zusammenfällt.

In dem Grundkörper 4 ist ferner ein zweiter Strömungskanal 18 zur Verbindung der Querschnittsverengung 8 mit einem Druckwandler gebildet. Wie aus Fig. 1 ersichtlich ist, ist neben dem zweiten Strömungskanal 18 ein weiterer zweiter Strömungskanal 18' vorgesehen. Aus der Zeichnung ist nicht ersichtlich und deshalb wird hier erläutert, dass insgesamt vier zweite Strömungskanäle 18, 18' vorgesehen sind, die in Umfangsrichtung des Grundkörpers 4 zueinander um etwa 90° versetzt umeinander angeordnet sind und sich jeweils in Radialrichtung des Grundkörpers 4 erstrecken.

Erfindungsgemäß ist der Grundkörper 4 in Axialrichtung in dem Bereich der Querschnittsverengung 8 geteilt ausgebildet und weist bei diesem Ausführungsbeispiel ein erstes Teil 20 und ein zweites Teil 22 auf. Wie aus Fig. 1 ersichtlich ist, sind die Teile 20, 22 bei diesem Ausführungsbeispiel an ihren im Montagezustand einander zugewandten Enden im wesentlichen komplementär zueinander ausgebildet, derart, dass die Teile 20, 22 zusammensteckbar sind. Hierzu weist das erste Teil 20 zur Bildung einer Schulter 24 einen radialen Absatz auf, wobei die Schulter 24 und das der Schulter 24 dem in Fig. 1 dargestellten Montagezustand zugewandte Ende des zweiten Teiles 22 axiale Anschlagflächen definieren.

Bei dem dargestellten Ausführungsbeispiel kommunizieren die zweiten Strömungskanäle 18, 18' über einen Ringraum 26 mit dem ersten Strömungskanal 6, wobei der Ringraum 26 in Axialrichtung zwischen dem ersten Teil 20 und dem zweiten Teil 22 gebildet und axial durch die Teile 20, 22 begrenzt ist. Aus der Zeichnung ist ersichtlich, dass der Ringraum 26 an seinem radial äußeren Ende, an dem der Ringraum 26 mit den zweiten Strömungskanälen 18, 18' verbunden ist, eine Querschnittserweiterung 27 aufweist. Die Querschnittserweiterung 27 ist dadurch gebildet, dass an dem dem zweiten Teil 22 zugewandten Ende des ersten Teiles 20 an dessen axialem Ende radial außen eine umlaufende Fase und in Radialrichtung zu der Fase gegenüberliegend an dem zweiten Teil 22 eine Ringnut gebildet ist. Der Ringraum 26 weist also in Radialrichtung von dem ersten Strömungskanal 6 ausgehend einen ersten Abschnitt mit konstantem oder im wesentlichen konstantem Querschnitt auf, wobei sich an den ersten Abschnitt in Radialrichtung zwischen demselben und den zweiten Strömungskanälen 18, 18' ein zweiter Abschnitt anschließt, der einen gegenüber dem ersten Abschnitt sich radial nach außen zu den zweiten Strömungskanälen 18, 18' hin erweiternden Querschnitt aufweist.

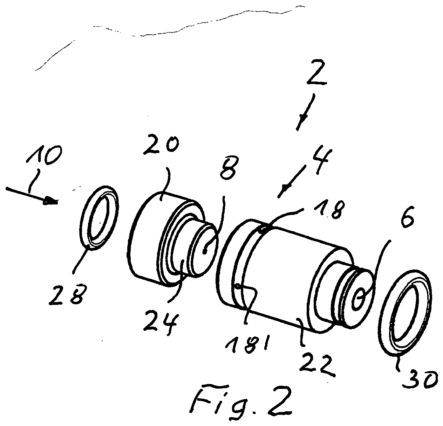

Fig. 2 zeigt eine perspektivische Explosionsdarstellung des Messkörpers 2, wobei mit dem Bezugszeichen 28, 30 Dichtungen bezeichnet sind, die beim Anschließen des ersten Teiles 20 an eine Druckluftquelle bzw. des zweiten Teiles 22 an einen Messkopf für eine Abdichtung sorgen.

Die Funktionsweise des erfindungsgemäßen Messkörpers 2 ist wie folgt:
Bei Betrieb strömt Druckluft in der Strömungsrichtung 10 durch den ersten Strömungskanal 6 zu einer Messdüse. Hierbei wirkt die Querschnittsverengung 8 nach Art einer Venturi-Düse. Beispielsweise kann der Differenzdruck zwischen dem ersten Strömungskanal 6 und dem zweiten Strömungskanälen 18, 18' gemessen werden. Wird die Messdüse in Wechselwirkung mit einem zu vermessenden Werkstück gebracht, so ändert sich der Druck in den zweiten Strömungskanälen 18, 18' und damit der Differenzdruck. Mittels eines geeigneten Messwandlers kann dieses Drucksignal bzw. Differenzdrucksignal in ein Messsignal gewandelt werden, aus dem sich bei der Vermessung des Werkstücks ein Messwert ergibt. Die Art und Weise, wie mittels eines pneumatischen Messverfahrens in der dimensionellen Messtechnik unter Verwendung des Venturi-Prinzips gemessen wird, ist dem Fachmann bekannt und wird daher hier nicht näher erläutert.

Dadurch, dass der Grundkörper 4 erfindungsgemäß axial zwei- oder mehrteilig ausgebildet ist, ist die Bearbeitung des Messkörpers, beispielsweise zur Bildung des ersten Strömungskanales 6, der zweiten Strömungskanäle 18, 18' und des Ringraumes 26, besonders einfach und mit hoher Präzision möglich. Insbesondere ist es durch die erfindungsgemäß vorgesehene axiale Mehrteiligkeit des Grundkörpers vereinfacht, den Querschnitt der zweiten Strömungskanäle 18, 18' und des Ringraumes 26 klein zu halten. Der erfindungsgemäße Messkörper ist damit nicht nur besonders einfach und damit kostengünstig herstellbar, sondern weist darüber hinaus ein günstiges Messverhalten auf, insbesondere im Hinblick auf ein geringes Messrauschen und eine kurze Antwortzeit.

## Patentansprüche

1. Messkörper (2) einer pneumatischen Messvorrichtung zur Vermessung eines Werkstücks,
mit einem Grundkörper (4), in dem ein erster Strömungskanal (6) zur Verbindung einer Druckluftquelle mit einer Messdüse gebildet ist, wobei der erste Strömungskanal in einem Verengungsbereich wenigstens eine Querschnittsverengung (8) aufweist, und mit einem zweiten Strömungskanal (18,18') zur Verbindung des Verengungsbereiches mit einem Messwandler,
dadurch gekennnzeichnet,
dass der Grundkörper (4) in Axialrichtung wenigstens in dem Verengungsbereich geteilt (20,22) ausgebildet ist.

2. Messkörper nach Anspruch 1, **dadurch gekennzeichnet, dass** der zweite Strömungskanal (18, 18') über einen Ringraum (26) mit dem ersten Strömungskanal (6) kommuniziert.

3. Messkörper nach Anspruch 2, **dadurch gekennzeichnet, dass** der Grundkörper (4) wenigstens zwei Teile (20, 22) aufweist und dass der Ringraum (26) in Axialrichtung zwischen den Teilen (20, 22) gebildet ist.

4. Messkörper nach Anspruch 3, **dadurch gekennzeichnet, dass** die Teile (20, 22) an ihren in Montagezustand einander zugewandten Enden im wesentlichen komplementär zueinander ausgebildet sind, derart, dass die Teile (20, 22) zusammensteckbar sind.

5. Messkörper nach Anspruch 3 oder 4, **dadurch gekennzeichnet, dass** eines der Teile (20, 22) zur Bildung einer Schulter (24) einen radialen Absatz aufweist und dass die Schulter (24) und das der Schulter (24) im Montagezustand zugewandte Ende des anderen Teiles (22) axiale Anschlagflächen definieren.

6. Pneumatische Messvorrichtung zur Vermessung eines Werkstücks, **dadurch gekennzeichnet, dass** sie wenigstens einen Messkörper nach einem der Ansprüche 1 bis 5 aufweist.

## Claims

1. Measuring body (2) of a pneumatic measuring device for measuring a workpiece, comprising a base element (4) in which a first flow channel (6) is formed for connecting a compressed air source to a measuring nozzle, the first flow channel having at least one cross-sectional constriction (8) in a narrowed area,
and comprising a second flow channel (18,18') for connecting the narrowed area to a transducer,
**characterised in that**
the base element (4) is designed to be divided (20, 22) in axial direction at least in the narrowed area.

2. Measuring body according to claim 1, **characterised in that** the second flow channel (18,18') communicates with the first flow channel (6) via an annular space (26).

3. Measuring body according to claim 2, **characterised in that** the base element (4) comprises at least two parts (20, 22), and the annular space (26) is formed in the axial direction between the parts (20, 22).

4. Measuring body according to claim 3, **characterised in that** the parts (20, 22) are designed to be substantially complementary to one another at their mutually facing ends in the assembled state, so that the parts (20, 22) can be fitted together.

5. Measuring body according to claim 3 or 4, **characterised in that** one of the parts (20, 22) has a radial offset for forming a shoulder (24) and the shoulder (24) and the end of the other part (22) facing the shoulder (24) in the assembled state define axial stop surfaces.

6. Pneumatic measuring device for measuring a workpiece, **characterised in that** it comprises at least one measuring body according to any one of claims 1 to 5.

## Revendications

1. Corps de mesure (2) d'un dispositif de mesure pneumatique pour la mesure d'une pièce, avec un corps de base (4) dans lequel se trouve un premier canal d'écoulement (6) pour la liaison avec une source d'air comprimé avec une buse de mesure, le premier canal d'écoulement comprenant, dans une zone de liaison, au moins un rétrécissement de section (8), et avec un deuxième canal d'écoulement (18, 18') pour la liaison de la zone de liaison avec un convertisseur de mesure,
**caractérisé en ce que**
le corps de mesure (4) est conçu de façon à être divisé (20, 22) dans la direction axiale au moins dans la zone de rétrécissement.

2. Corps de mesure selon la revendication 1, **caractérisé en ce que** le deuxième canal d'écoulement (18, 18') communique avec le premier canal d'écoulement (6) par l'intermédiaire d'un espace annulaire (26).

3. Corps de mesure selon la revendication 2, **caractérisé en ce que** le corps de base (4) comprend au moins deux parties (20, 22) et **en ce que** l'espace annulaire (26) est réalisé dans la direction axiale entre les parties (20, 22).

4. Corps de mesure selon la revendication 3, **caractérisé en ce que** les parties (20, 22) sont conçues, au niveau de leurs extrémités orientées entre elles dans l'état de montage, de manière à être globalement complémentaires entre elles, de façon à ce que les parties (20, 22) puissent être emboîtées.

5. Corps de mesure selon la revendication 3 ou 4, **caractérisé en ce qu'**une des parties (20, 22) comprend, pour la formation d'un épaulement (24), un décalage radial et **en ce que** l'épaulement (24) et l'extrémité de l'autre partie (22) orientée vers l'épaulement (24) dans l'état de montage définissent des surfaces d'appui axiales.

6. Dispositif de mesure pneumatique pour la mesure d'une pièce, **caractérisé en ce qu'**il comprend au moins un corps de mesure selon l'une des revendications 1 à 5.
